(19) Europäisches Patentamt / European Patent Office / Office européen des brevets

(11) **EP 3 850 397 B1**

(12) **FASCICULE DE BREVET EUROPEEN**

(45) Date de publication et mention de la délivrance du brevet:
**10.01.2024 Bulletin 2024/02**

(51) Classification Internationale des Brevets (IPC):
**G01S 17/42** *(2006.01)*      **G01S 17/89** *(2020.01)*
**G01S 17/93** *(2020.01)*      **G01S 7/48** *(2006.01)*

(21) Numéro de dépôt: **19735358.4**

(52) Classification Coopérative des Brevets (CPC):
**G01S 7/4808; G01S 17/42; G01S 17/89; G01S 17/931**

(22) Date de dépôt: **08.07.2019**

(86) Numéro de dépôt international:
**PCT/EP2019/068265**

(87) Numéro de publication internationale:
**WO 2020/052830 (19.03.2020 Gazette 2020/12)**

(54) **PROCEDE DE DETECTION DE ROUTE POUR UN VEHICULE AUTOMOBILE MUNI D'UN CAPTEUR LIDAR**

VERFAHREN ZUR STRASSENERKENNUNG FÜR EIN MIT EINEM LIDARSENSOR AUSGESTATTETES KRAFTFAHRZEUG

METHOD OF ROAD DETECTION FOR AN AUTOMOTIVE VEHICLE FITTED WITH A LIDAR SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2018 FR 1858137**

(43) Date de publication de la demande:
**21.07.2021 Bulletin 2021/29**

(73) Titulaire: **Renault s.a.s**
**92100 Boulogne Billancourt (FR)**

(72) Inventeur: **GHALLABI, Farouk**
**91300 Massy (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2010 217 529      US-A1- 2014 081 573**
**US-A1- 2018 211 119**

• **SOREN KAMMEL ET AL: "Lidar-based lane marker detection and mapping", INTELLIGENT VEHICLES SYMPOSIUM, 2008 IEEE, IEEE, PISCATAWAY, NJ, USA, 4 juin 2008 (2008-06-04), pages 1137-1142, XP031318963, ISBN: 978-1-4244-2568-6**

**Description**

L'invention a pour domaine technique la commande des véhicules autonomes et plus particulièrement, la détection de voies de circulation pour la commande de tels véhicules.

Le système de position par satellites utilisé actuellement est le système de navigation global par satellite GNSS (acronyme anglophone pour « Global Navigation Satellite System ») permettant d'obtenir une position avec une précision de l'ordre de quelques mètres. Il est à noter que les systèmes GNSS avec correction de cinématique temps réel RTK (Acronyme anglophone pour « Real Time Kinematic ») ont une précision de l'ordre de 5cm. Cependant, de tels systèmes sont très coûteux est ne peuvent pas être utilisés pour des véhicules de série.

Par ailleurs, la fusion d'un système GNSS commercial avec des capteurs supplémentaires permet d'en combler les lacunes. Les capteurs supplémentaires peuvent être un accéléromètre, un gyroscope ou un odomètre. La précision obtenue pour un système GNSS commercial ainsi complémenté par des capteurs supplémentaires, tel que le capteur « U-blox », est d'environ 2-3m.

Cette précision n'est toujours pas suffisante pour réaliser une localisation de voie de circulation dans laquelle se trouve le véhicule (« lane level » en langue anglaise).

La baisse du prix des caméras et l'amélioration des algorithmes de reconnaissance ont permis de remédier à ce problème en utilisant une caméra pour détecter les lignes de marquages et par conséquent pour reconnaître la voie de conduite. Néanmoins la détection n'est pas parfaite. La caméra étant un capteur passif, elle ne produit pas sa propre source de lumière et ne fonctionne donc pas en l'absence de lumière. Par ailleurs, le principe de la caméra repose sur une géométrie projective de l'environnement 3D sur un plan 2D suite à laquelle une perte de l'information 3D de l'environnement se produit. Ceci rend la tâche de la reconstruction 3D de l'environnement difficile dans le cas d'une seule caméra (cas monoculaire).

Il existe toutefois des solutions de capteurs actifs, actuellement disponibles sur le marché, proposant une représentation 3D de l'environnement telles que les capteurs LIDAR (acronyme anglophone pour « Light Détection and Ranging », détection et détermination de distance à base de lumière). Un tel capteur est capable de collecter un nuage de points très dense qui peut atteindre 700 000 points par rotation complète du capteur. Le nuage de points ainsi obtenu représente une grande quantité de données, rafraîchie périodiquement. Le traitement de ces données en temps réel est un vrai défi technologique.

En l'occurrence, un objectif est de segmenter la route afin de réduire la quantité de données à traiter et d'en accélérer le traitement.

En effet, la route ne représente qu'un sous ensemble de la totalité des données LIDAR.

De l'état de la technique, on connaît le l'utilisation de capteurs pour obtenir la surface de la route à proximité d'un véhicule. Une fois des mesures de la route récupérées à l'aide d'un capteur, les données représentant la route sont supprimées en appliquant des filtres pour ne garder que les marquages de la route. Deux filtres sont mentionnés, un filtre de différence pour la détection des délimitations de voie et un filtre gaussien. Les données filtrées sont ensuite comparées aux marquages de voie attendus. Les informations sur les marquages de voie attendues sont présentes dans un fichier comportant des données sur des tronçons de route comme le largueur de voie à des endroits précises, la position des voies et la relation entre les voies.

Toutefois, l'état de la technique ne décrit pas comment est identifiée la route pour pouvoir isoler les marquages et emploie des données représentant la route. Il repose aussi sur l'identification au préalable de la voie pour simplifier le traitement, ce qui demande un travail préalable pour que le système soit utilisable.

Le problème technique à résoudre est donc de délimiter une route de manière efficace et performante.

Le document US2014/0081573A1 divulgue un capteur LIDAR rotatif fournissant un nuage de points proches de la surface d'une route. La hauteur des points du nuage est comparée à la hauteur attendue de la route, pour déduire l'état de la route, inondée ou présence de neige, la moyenne et l'écart type sont utilisés pour caractériser l'état de la route.

L'invention a pour objet un procédé de détection de route pour un véhicule automobile muni d'un capteur LIDAR multicouche rotatif et d'au moins un moyen de traitement de données, comprenant les étapes suivantes :

on acquiert des données LIDAR de l'environnement du véhicule automobile en coordonnées polaires avec le capteur LIDAR,
on supprime des données LIDAR acquises les données pour lesquelles la coordonnée polaire relative à l'angle du faisceau par rapport au plan du véhicule est supérieure ou égale à zéro,
pour chaque angle du faisceau par rapport au plan du véhicule, et pour chaque donnée LIDAR, on réalise les étapes suivantes :

on détermine des coordonnées théoriques d'un point, correspondant à la donnée LIDAR, fonction notamment de l'angle du faisceau par rapport au plan du véhicule et de l'angle du faisceau dans le plan du véhicule,
on détermine l'écart-type entre les coordonnées théoriques et les coordonnées de la donnée LIDAR, et

on détermine que la donnée LIDAR fait partie de la route si l'écart-type est inférieur à un seuil prédéfini.

Une donnée LIDAR peut être un point du nuage de points acquis par le capteur LIDAR sur une révolution, ou un tronçon de révolution comprenant au moins deux points consécutifs du nuage de points acquis par le capteur LIDAR présentant un même angle de faisceau par rapport au plan du véhicule.

Lorsque la donnée LIDAR est un point du nuage de points, on peut déterminer les coordonnées théoriques du point correspondant à la donnée LIDAR comme celles d'un point compris dans un cercle idéal inscrit dans le plan de la route centré sur le véhicule ou lorsque la donnée LIDAR est un tronçon comprenant au moins deux points consécutifs du nuage de points, les coordonnées théoriques et les coordonnées des tronçons étant définies en coordonnées cartésiennes et comprenant une coordonnée selon la direction d'évolution du véhicule dans le plan du véhicule, une coordonnée selon une direction perpendiculaire à la direction d'évolution du véhicule dans le plan du véhicule et une coordonnée théorique selon la normale au plan du véhicule,

la coordonnée théorique selon la normale au plan du véhicule peut être définie comme la moyenne des coordonnées selon la normale au plan du véhicule des points du nuage de points acquis par le capteur LIDAR compris dans le tronçon,

les autres coordonnées théoriques pouvant être définies comme les coordonnées d'un point sur un cercle idéal inscrit dans le plan de la route centré sur le véhicule.

On peut déterminer au moins deux secteurs dans le plan du véhicule associé chacun à un sens de parcours du secteur,

pour chaque secteur, on peut réaliser les étapes suivantes :

on parcourt les données LIDAR dans le sens de parcours, on détermine l'appartenance de chaque donnée LIDAR à la route, on interrompt le parcours des données LIDAR dès lors que l'on détermine qu'une donnée LIDAR n'appartient pas à la route et on détermine que les données LIDAR du secteur n'ayant pas été parcourues n'appartiennent pas à la route.

Pour chaque secteur, on peut appliquer un filtre gaussien aux résultats de la détermination de l'écart-type afin de réduire l'impact des irrégularités, notamment un filtre gaussien à noyau de taille 3 et de déviation standard 5.

On peut définir que la direction de déplacement du véhicule en marche avant correspond à un angle 0 de l'angle du faisceau dans le plan du véhicule,

on peut définir quatre secteurs dans le plan du véhicule,

un premier secteur comprenant les données LIDAR pour lesquelles l'angle dans le plan du véhicule s'étend de l'angle 0 à l'angle $\pi/2$, et dans lequel on parcourt les données LIDAR de l'angle initial 0 à l'angle final $\pi/2$ dans le plan du véhicule,

un deuxième secteur comprenant les données LIDAR pour lesquelles l'angle dans le plan du véhicule s'étendant de l'angle $\pi/2$ à l'angle $\pi$, et dans lequel on parcourt les données LIDAR de l'angle initial $\pi$ à l'angle final $\pi/2$ dans le plan du véhicule,

un troisième secteur comprenant les données LIDAR pour lesquelles l'angle dans le plan du véhicule s'étend de l'angle $\pi$ à l'angle $3\pi/2$ et dans lequel on parcourt les données LIDAR de l'angle initial $\pi$ à l'angle final $3\pi/2$ dans le plan du véhicule, et

un quatrième secteur comprenant les données LIDAR pour lesquelles l'angle dans le plan du véhicule s'étend de l'angle $3\pi/2$ à l'angle 0, et dans lequel on parcourt les données LIDAR de l'angle initial 0 à l'angle final $3\pi/2$ dans le plan du véhicule.

On peut réaliser les étapes relatives à chaque secteur par l'intermédiaire d'un moyen de traitement distinct.

Pour chaque angle du faisceau par rapport au plan du véhicule, on peut déterminer qu'une donnée LIDAR appartenant à la route correspond à un marquage au sol, si l'intensité lumineuse réfléchie perçue par le capteur LIDAR est inférieure à un seuil prédéterminée

On peut utiliser un procédé de suivi pour assurer le suivi de la route lorsqu'elle est sujette à occlusion au moins partielle.

Le véhicule automobile peut être un véhicule autonome.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre une vue polaire des données LIDAR obtenue pour un angle du faisceau laser par rapport au plan du véhicule, et
- la figure 2 illustre un exemple de secteurs balayés par le procédé.

Le procédé de détection de route permet de déterminer la position de la route par rapport au véhicule grâce à l'utilisation d'un capteur LIDAR multicouche rotatif.

On rappelle qu'un LIDAR est un capteur qui permet de déterminer la distance entre le capteur et des obstacles en émettant des faisceaux lasers à un intervalle régulier, faisceaux qui sont renvoyés par les objets de l'environnement. Les faisceaux ainsi réfléchis sont détectés par le LIDAR pour estimer la position de l'objet ayant réfléchi le faisceau.

Un capteur LIDAR peut en plus être animé d'un mouvement de rotation, notamment à 360° pour détecter la position des points de son environnement.

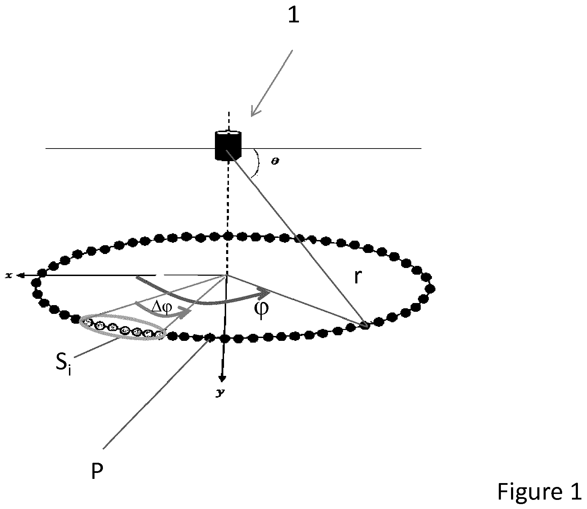

Un tel capteur LIDAR, référencé 1 sur la figure 1, comprend plusieurs lasers orientés chacun avec un angle différent par rapport au plan du véhicule. En tournant, et en réalisant plusieurs acquisitions lors d'une rotation, le capteur LIDAR détermine la position des points de réflexion de chaque faisceau laser sur une surface et génère un nuage de points dont les coordonnées correspondent aux positions relatives des points de réflexion par rapport au capteur LIDAR.

Les coordonnées d'un point de réflexion P sont généralement exprimées en coordonnées polaires sous la forme $(r,\theta,\varphi)$ avec $r$ la distance entre le capteur et le point de réflexion, $\theta$ l'angle du faisceau par rapport au plan du véhicule et $\varphi$ l'angle du faisceau dans le plan du véhicule. La figure 1 illustre un tel repère. Par plan du véhicule, on entend le plan du châssis du véhicule ou un plan parallèle au châssis du véhicule. Il est également à noter que le repère lié au véhicule est lié au repère du LIDAR de sorte qu'aucune transformation par rotation n'est nécessaire pour passer d'un repère à l'autre.

Le capteur LIDAR générant un nuage de points de très grande taille à chaque rotation complète, il est nécessaire d'en réaliser une segmentation afin de limiter les temps de calcul. Pour la suite de la description, on considère qu'un point du nuage de points est une donnée LIDAR.

Au cours d'une première étape de la segmentation, on ne considère que les données LIDAR dont l'angle $\theta$ est négatif, c'est-à-dire, les données LIDAR issues de faisceaux laser émis avec un angle en dessous du plan passant par le capteur parallèle avec le plan du véhicule. En effet, seuls ces faisceaux peuvent interagir avec la route.

Au cours d'une deuxième étape de la segmentation, on sépare les données LIDAR en fonction de leur angle $\theta$ par rapport au plan du véhicule. En effet, les inventeurs ont reconnu que les faisceaux laser émis pour un angle $\theta$ par rapport au plan du véhicule donné forment un cercle idéal sur une route considérée lisse, continue et quasiment plate.

Par contre, quand un faisceau laser passe sur autre chose que la route, comme le bas-côté, on obtient une dispersion de position autour du cercle idéal.

Pour identifier les points de la route, on réalise les sous étapes suivantes pour chaque ensemble de données LIDAR associé à un angle $\theta$ par rapport au plan du véhicule.

On détermine les coordonnées théoriques $(x_{th}, y_{th}, z_{th})$ des points du cercle idéal en fonction notamment de l'angle $\theta$ par rapport au plan du véhicule.

Pour un angle $\theta$ par rapport au plan du véhicule donné et pour chaque angle $\varphi$ dans le plan du véhicule, on détermine l'écart-type $\sigma$ entre les coordonnées théoriques $(x_{th}, y_{th}, z_{th})$ et les coordonnées $(xi, yi, zi)$ de la donnée LIDAR pour un même angle $\varphi$ par application de l'équation Eq. 1 suivante.

$$\sum_{n}^{i=0} \sqrt{(x_{th} - x_i)^2 + (y_{th} - y_i)^2 + (z_{th} - z_i)^2} = \sigma \qquad \text{(Eq. 1)}$$

Malgré la segmentation mise en place ci-dessus, la quantité de données à traiter demeure importante. On note que pour un angle $\theta$ par rapport au plan du véhicule donné, le capteur LIDAR balaye 360° ou $2\pi$ relativement à l'angle $\varphi$ dans le plan du véhicule.

Pour améliorer la segmentation du nuage de points obtenu du capteur LIDAR, il est proposé de réduire le nombre de points relativement à l'angle $\varphi$ dans le plan du véhicule.

Pour réaliser cela, on considère que la résolution du capteur LIDAR peut être dégradée sans impact notable sur la capacité de détection de la route.

On regroupe alors au sein d'un tronçon $S_i$ plusieurs points présentant un même angle $\theta$ par rapport au plan du véhicule et dont les angles $\varphi$ dans le plan du véhicule sont successifs et s'étendent sur un intervalle angulaire prédéfini $\Delta\varphi$. L'intervalle angulaire prédéfini peut prendre une valeur comprise entre 1° et 5°. La figure 1 illustre un tel tronçon Si. Le regroupement des points peut être réalisé par détermination d'une valeur moyenne des coordonnées des points du tronçon. Les tronçons Si forment ainsi une donnée LIDAR alternative aux points du nuage de points obtenu du capteur LIDAR.

On réalise un tel regroupement de points au sein de tronçons Si (i variant de 1 à n, n étant le nombre total de tronçons) pour tous les points présentant un même angle $\theta$ par rapport au plan du véhicule et ce, avant la détermination de l'écart-type $\sigma$.

Dans un mode de réalisation alternatif, lorsque l'on considère comme données LIDAR des tronçons $S_i$, on remplace, pour chaque tronçon Si, la hauteur théorique $z_{th}$ d'un point du cercle idéal par la moyenne $z_\mu$ de la hauteur zi des points du nuage de points compris dans le tronçon Si. On utilise alors une version modifiée de l'équation Eq. 1 pour déterminer l'écart-type $\sigma$.

$$\sum_{n}^{i=0} \sqrt{(x_{th} - x_i)^2 + (y_{th} - y_i)^2 + (z_\mu - z_i)^2} = \sigma \qquad \text{(Eq. 2)}$$

Les équations Eq. 1 et Eq. 2 sont exprimées en coordonnées cartésiennes. Toutefois, la transformation de ces équations en équations exprimées dans un repère polaire fait partie des connaissances générales de l'homme du métier. Il est ainsi possible de conserver un repère polaire pour toutes les étapes du procédé.

Indépendamment des données LIDAR considérées, points du nuage de points ou tronçons Si, on détermine que les données LIDAR dont l'écart-type $\sigma$ est inférieur à un seuil prédéfini font partie de la route, les autres tronçons ne faisant pas partie de la route.

Pour réduire davantage la quantité de données à traiter, on propose de ne pas balayer l'ensemble des données LIDAR présentant un même angle $\theta$ lors de la détermination de l'écart-type $\sigma$.

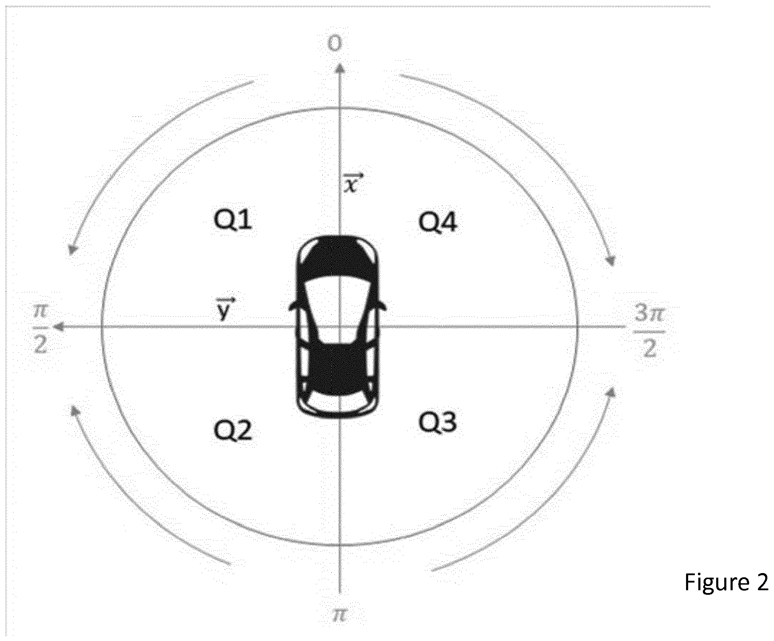

Pour réaliser cela, on découpe l'espace dans le plan du véhicule et correspondant à l'angle $\varphi$ en secteurs. Dans un mode de réalisation, illustré par la figure 2, on peut définir un premier secteur Q1 à l'avant gauche du véhicule, un deuxième secteur Q2 à l'arrière gauche du véhicule et un troisième secteur Q3 à l'arrière droit du véhicule et un quatrième secteur Q4 à l'avant droit du véhicule. On peut également définir les secteurs par rapport à leurs angles $\varphi$ limites. Ainsi, le premier secteur Q1 s'étend de l'angle $\varphi = 0$ à l'angle $\varphi = \pi/2$, le deuxième secteur Q2 de l'angle $\varphi = \pi/2$ à $\varphi = \pi$, le troisième secteur Q3 de l'angle $\varphi = \pi$ à $\varphi = 3\pi/2$ et le quatrième secteur Q4 de $\varphi = 3\pi/2$ à $\varphi = 0$, avec $\varphi=0$ aligné avec la direction de déplacement du véhicule en marche avant.

Lors de la recherche de l'appartenance à la route des données LIDAR présentant un même angle $\theta$, on parcourt les données LIDAR pour un angle $\varphi$ variant de 0 à $\pi/2$ pour le premier secteur Q1, de $\pi$ à $\pi/2$ pour le deuxième secteur Q2, de $\pi$ à $3\pi/2$ pour le troisième secteur Q3, et de 0 à $3\pi/2$ pour le quatrième secteur. Un tel ordre de parcours permet de donner la priorité à une détection de la route devant et derrière le véhicule, qui sont les directions d'évolution privilégiées du véhicule.

Lors du parcours d'un secteur, on recherche les données LIDAR qui ne correspondent pas à la route, c'est-à-dire, les données LIDAR pour lesquelles l'écart-type $\sigma$ est supérieur au seuil prédéterminé. La recherche est réalisée pour chaque secteur entre les angles et dans le sens identifiés ci-dessus et jusqu'à l'angle pour lequel l'écart-type devient supérieur ou égal au seuil prédéterminé. Dès lors, on arrête le parcours des données LIDAR du secteur. Les données LIDAR restantes non parcourues sont considérées comme ne faisant pas partie de la route.

Après avoir effectué la recherche sur les quatre secteurs, on supprime les données LIDAR ne correspondant pas à la route de sorte à ne conserver que les données LIDAR de la route.

Le traitement des secteurs peut être réalisé séquentiellement ou simultanément selon le nombre et la puissance des unités de calcul.

Dans un mode de réalisation particulier, on applique, sur chaque secteur Q1,Q2,Q3,Q4 un filtre gaussien à l'écart-type $\sigma$ afin de réduire l'impact des irrégularités avant la recherche des points ou tronçons appartenant à la route. Un filtre à noyau de taille 3 et de déviation standard 5 est particulièrement adapté pour cette utilisation.

Dans un mode de réalisation particulier, on recherche les marquages de voie en fonction de l'intensité du faisceau laser réfléchi pour chaque point. En effet, un capteur LIDAR permet de détecter des matières différentes en fonction de l'intensité de la lumière renvoyée. Il est donc possible d'identifier les délimitations des voies sur la route à l'aide de la réflectivité des marquages au sol.

Pour réaliser cela, on compare l'intensité associée à chaque point correspondant à la route à un seuil prédéterminé. Les marquages au sol sont les points dont l'intensité est inférieure au seuil prédéterminé qui appartiennent à la route.

Dans un mode de réalisation particulier, on utilise un procédé de suivi (« tracking » en langue anglaise) pour assurer le suivi les limites de route lorsqu'elles sont sujettes à occlusion (par des véhicules, par exemple).

## Revendications

1. Procédé de détection de route pour un véhicule automobile muni d'un capteur LIDAR (1) multicouche rotatif et d'au moins un moyen de traitement de données, comprenant les étapes suivantes

   on acquiert des données LIDAR de l'environnement du véhicule automobile en coordonnées polaires avec le capteur LIDAR (1),
   on supprime des données LIDAR acquises les données pour lesquelles la coordonnée polaire relative à l'angle ($\Theta$) du faisceau par rapport au plan du véhicule est supérieure ou égale à zéro,
   pour chaque angle $\Theta$ du faisceau par rapport au plan du véhicule, et pour chaque donnée LIDAR, on réalise les étapes suivantes :
on détermine des coordonnées théoriques d'un point, correspondant à la donnée LIDAR, fonction notamment de l'angle du faisceau par rapport au plan du véhicule et de l'angle ($\Delta\varphi$) du faisceau dans le plan du véhicule, on détermine l'écart-type entre les coordonnées théoriques et les coordonnées de la donnée LIDAR, et on détermine que la donnée LIDAR fait partie de la route si l'écart-type est inférieur à un seuil prédéfini, une donnée LIDAR étant un point du nuage de points acquis par le capteur LIDAR sur une révolution, ou un tronçon ($S_i$) comprenant au moins deux points consécutifs du nuage de points acquis par le capteur LIDAR présentant un même angle de faisceau par rapport au plan du véhicule et lorsque la donnée LIDAR est un point du nuage de points, on détermine les coordonnées théoriques du point correspondant à la donnée LIDAR comme celles d'un point compris dans un cercle idéal inscrit dans le plan de la route centré sur le véhicule

ou lorsque la donnée LIDAR est un tronçon (Si) comprenant au moins deux points consécutifs du nuage de points, les coordonnées théoriques et les coordonnées des tronçons étant définies en coordonnées cartésiennes et comprenant une coordonnée selon la direction d'évolution du véhicule dans le plan du véhicule, une coordonnée selon une direction perpendiculaire à la direction d'évolution du véhicule dans le plan du véhicule et une coordonnée théorique selon la normale au plan du véhicule,

la coordonnée théorique selon la normale au plan du véhicule est définie comme la moyenne des coordonnées selon la normale au plan du véhicule des points du nuage de points acquis par le capteur LIDAR compris dans le tronçon (Si)

les autres coordonnées théoriques sont définies comme les coordonnées d'un point sur un cercle idéal inscrit dans le plan de la route centré sur le véhicule.

2. Procédé selon la revendication 1, dans lequel, on détermine au moins deux secteurs dans le plan du véhicule associé chacun à un sens de parcours du secteur,

    pour chaque secteur, on parcourt les données LIDAR dans le sens de parcours, on détermine l'appartenance de chaque donnée LIDAR à la route, on interrompt le parcours des données LIDAR dès lors que l'on détermine qu'une donnée LIDAR n'appartient pas à la route et on détermine que les données LIDAR du secteur n'ayant pas été parcourues n'appartiennent pas à la route.

3. Procédé selon la revendication 2, dans lequel, pour chaque secteur, on applique un filtre gaussien aux résultats de la détermination de l'écart-type afin de réduire l'impact des irrégularités, notamment un filtre gaussien à noyau de taille 3 et de déviation standard 5.

4. Procédé selon l'une quelconque des revendications 2 ou 3, dans lequel on définit que la direction de déplacement du véhicule en marche avant correspond à un angle 0 de l'angle ($\Delta\varphi$) du faisceau dans le plan du véhicule,

    on définit quatre secteurs dans le plan du véhicule,
    un premier secteur comprenant les données LIDAR pour lesquelles l'angle dans le plan du véhicule s'étend de l'angle 0 à l'angle $\pi/2$, et dans lequel on parcourt les données LIDAR de l'angle initial 0 à l'angle final $\pi/2$ dans le plan du véhicule,
    un deuxième secteur comprenant les données LIDAR pour lesquelles l'angle dans le plan du véhicule s'étendant de l'angle $\pi/2$ à l'angle $\pi$, et dans lequel on parcourt les données LIDAR de l'angle initial $\pi$ à l'angle final $\pi/2$ dans le plan du véhicule,
    un troisième secteur comprenant les données LIDAR pour lesquelles l'angle dans le plan du véhicule s'étend de l'angle $\pi$ à l'angle $3\pi/2$ et dans lequel on parcourt les données LIDAR de l'angle initial $\pi$ à l'angle final $3\pi/2$ dans le plan du véhicule, et
    un quatrième secteur comprenant les données LIDAR pour lesquelles l'angle dans le plan du véhicule s'étend de l'angle $3\pi/2$ à l'angle 0, et dans lequel on parcourt les données LIDAR dans le plan du véhicule de l'angle initial 0 à l'angle final $3\pi/2$ dans le plan du véhicule.

5. Procédé selon l'une quelconque des revendications 2 à 4. dans lequel on réalise les étapes relatives à chaque secteur par l'intermédiaire d'un moyen de traitement distinct.

6. Procédé selon l'une quelconque des revendications précédentes, dans lequel, pour chaque angle ($\Theta$) du faisceau par rapport au plan du véhicule, on détermine qu'une donnée LIDAR appartenant à la route correspond à un marquage au sol, si l'intensité lumineuse réfléchie perçue par le capteur LIDAR est inférieure à un seuil prédéterminé.

7. Procédé selon l'une quelconque des revendications précédentes, dans lequel le véhicule automobile est un véhicule autonome.

**Patentansprüche**

1. Verfahren zur Straßenerkennung für ein mit einem rotierenden mehrlagigen LIDAR-Sensor (1) und mit mindestens einer Datenverarbeitungseinrichtung ausgestattetes Kraftfahrzeug, umfassend die folgenden Schritte

   Erfassen der LIDAR-Daten der Umgebung des Kraftfahrzeugs als Polarkoordinaten mit dem LIDAR-Sensor (1),
   Löschen der Daten aus den erfassten LIDAR-Daten, für welche die Polarkoordinate bezüglich des Winkels ($\Theta$) des Strahls in Bezug auf die Ebene des Fahrzeugs größer als oder gleich null ist,
   für jeden Winkel ($\Theta$) des Strahls in Bezug auf die Ebene des Fahrzeugs und für jedes LIDAR-Datenelement Ausführen der folgenden Schritte:

   Bestimmen der theoretischen Koordinaten eines Punkts, die dem LIDAR-Datenelement entsprechen, insbesondere in Abhängigkeit vom Winkel des Strahls in Bezug auf die Ebene des Fahrzeugs und vom Winkel ($\Delta\varphi$) des Strahls in der Ebene des Fahrzeugs,
   Bestimmen der Standardabweichung zwischen den theoretischen Koordinaten und den Koordinaten des LIDAR-Datenelements und
   Bestimmen, dass das LIDAR-Datenelement zur Straße gehört, wenn die Standardabweichung geringer als ein vorgegebener Schwellenwert ist, wobei ein LIDAR-Datenelement ein Punkt der Punktwolke ist, die von dem LIDAR-Sensor über eine Umdrehung erfasst wird, oder ein Abschnitt ($S_i$), der mindestens zwei aufeinander folgende Punkte der von dem LIDAR-Sensor erfassten Punktwolke umfasst, die denselben Strahlwinkel in Bezug auf die Ebene des Fahrzeugs aufweisen, und wenn das LIDAR-Datenelement ein Punkt der Punktwolke ist, Bestimmen der theoretischen Koordinaten des dem LIDAR-Datenelement entsprechenden Punkts als diejenigen eines Punkts, der in einem idealen Kreis enthalten ist, der in die auf das Fahrzeug zentrierte Ebene der Straße einbeschrieben ist, oder wenn das LIDAR-Datenelement ein Abschnitt (Si) ist, der mindestens zwei aufeinander folgende Punkte der Punktwolke umfasst,
   wobei die theoretischen Koordinaten und die Koordinaten der Abschnitte als kartesische Koordinaten definiert sind und eine Koordinate gemäß der Fortbewegungsrichtung des Fahrzeugs in der Ebene des Fahrzeugs und eine Koordinate gemäß einer Richtung senkrecht zur Fortbewegungsrichtung in der Ebene des Fahrzeugs und eine theoretische Koordinate gemäß der Normalen zur Ebene des Fahrzeugs umfassen,
   die theoretische Koordinate gemäß der Normalen zur Ebene des Fahrzeugs als der Mittelwert der Koordinaten gemäß der Normalen zur Ebene des Fahrzeugs der Punkte der von dem LIDAR-Sensor erfassten Punktwolke, die in dem Abschnitte enthalten (Si) sind, definiert ist
   die anderen theoretischen Koordinaten als die Koordinaten eines Punkts auf einem idealen Kreis, der in die auf das Fahrzeug zentrierte Ebene der Straße einbeschrieben ist, definiert sind.

2. Verfahren nach Anspruch 1, bei dem mindestens zwei Sektoren in der Ebene des Fahrzeugs bestimmt werden, von denen jeder einer Durchlaufrichtung des Sektors zugeordnet ist,
   die LIDAR-Daten für jeden Sektor in der Durchlaufrichtung durchlaufen werden, die Zugehörigkeit jedes LIDAR-Datenelements zu der Straße bestimmt wird, das Durchlaufen der LIDAR-Daten unterbrochen wird, sobald bestimmt wird, dass ein LIDAR-Datenelement nicht zu der Straße gehört, und bestimmt wird, dass die LIDAR-Daten des Sektors, die nicht durchlaufen worden sind, nicht zu der Straße gehören.

3. Verfahren nach Anspruch 2, bei dem, für jeden Sektor, ein Gauß-Filter auf die Ergebnisse der Bestimmung der Standardabweichung angewandt wird, um die Auswirkungen der Unregelmäßigkeiten zu reduzieren, insbesondere ein Gauß-Filter mit einem Kern der Größe 3 und der Standardabweichung 5.

4. Verfahren nach einem der Ansprüche 2 oder 3, bei dem definiert wird, dass die Fahrtrichtung des Fahrzeugs bei Vorwärtsfahrt einem Winkel 0 des Winkels ($\Delta\varphi$) des Strahls in der Ebene des Fahrzeugs entspricht,

   vier Sektoren in der Ebene des Fahrzeugs definiert werden,
   ein erster Sektor, der die LIDAR-Daten umfasst, bei denen der Winkel in der Ebene des Fahrzeugs sich vom Winkel 0 bis zum Winkel $\pi/2$ erstreckt, und bei dem die LIDAR-Daten von dem Ausgangswinkel 0 bis zu dem Endwinkel $\pi/2$ in der Ebene des Fahrzeugs durchlaufen werden,
   ein zweiter Sektor, der die LIDAR-Daten umfasst, bei denen der Winkel in der Ebene des Fahrzeugs sich vom Winkel $\pi/2$ bis zum Winkel $\pi$ erstreckt, und bei dem die LIDAR-Daten von dem Ausgangswinkel $\pi$ bis zu dem Endwinkel $\pi/2$ in der Ebene des Fahrzeugs durchlaufen werden,
   ein dritter Sektor, der die LIDAR-Daten umfasst, bei denen der Winkel in der Ebene des Fahrzeugs sich vom Winkel $\pi$ bis zum Winkel $3\pi/2$ erstreckt, und bei dem die LIDAR-Daten von dem Ausgangswinkel $\pi$ bis zu dem

Endwinkel 3π/2 in der Ebene des Fahrzeugs durchlaufen werden, und ein vierter Sektor, der die LIDAR-Daten umfasst, bei denen der Winkel in der Ebene des Fahrzeugs sich vom Winkel 3π/2 bis zum Winkel 0 erstreckt, und bei dem die LIDAR-Daten von dem Ausgangswinkel 0 bis zu dem Endwinkel 3π/2 in der Ebene des Fahrzeugs durchlaufen werden.

5. Verfahren nach einem der Ansprüche 2 bis 4, bei dem die Schritte bezüglich jedes Sektors mittels einer getrennten Verarbeitungseinrichtung ausgeführt werden.

6. Verfahren nach einem der vorhergehenden Ansprüche, bei dem, für jeden Winkel (Θ) des Strahls in Bezug auf die Ebene des Fahrzeugs, bestimmt wird, dass ein zu der Straße gehörendes LIDAR-Datenelement einer Markierung am Boden entspricht, wenn die von dem LIDAR-Sensor wahrgenommene reflektierte Lichtintensität geringer als ein vorbestimmter Schwellenwert ist.

7. Verfahren nach einem der vorhergehenden Ansprüche, bei dem das Kraftfahrzeug ein autonomes Fahrzeug ist.


**Claims**

1. Road detection method for a motor vehicle provided with a rotary multilayer LIDAR sensor (1) and at least one data processing means, comprising the following steps

   LIDAR data are acquired from the environment of the motor vehicle in terms of polar coordinates with the LIDAR sensor (1),
   from the acquired LIDAR data, the data for which the polar coordinate relative to the angle (Θ) of the beam with respect to the plane of the vehicle is greater than or equal to zero, for each angle (Θ) of the beam with respect to the plane of the vehicle, are deleted, and for each LIDAR datum, the following steps are performed:

   theoretical coordinates of a point, corresponding to the LIDAR datum, are determined notably as a function of the angle of the beam with respect to the plane of the vehicle and of the angle ($\Delta\varphi$) of the beam in the plane of the vehicle,
   the standard deviation is determined between the theoretical coordinates and the coordinates of the LIDAR datum, and
   it is determined that the LIDAR datum forms part of the road if the standard deviation is below a predefined threshold, a LIDAR datum being a point of the scatter chart acquired by the LIDAR sensor over one revolution, or a section ($S_i$) comprising at least two consecutive points of the scatter chart acquired by the LIDAR sensor exhibiting a same beam angle with respect to the plane of the vehicle and when the LIDAR datum is a point of the scatter chart, the theoretical coordinates of the point corresponding to the LIDAR datum are determined to be those of a point included in an ideal circle inscribed in the plane of the road centred on the vehicle or when the LIDAR datum is a section (Si) comprising at least two consecutive points of the scatter chart,
   the theoretical coordinates and the coordinates of the sections being defined as Cartesian coordinates and comprising a coordinate in the direction of movement of the vehicle in the plane of the vehicle, a coordinate in a direction at right angles to the direction of movement of the vehicle in the plane of the vehicle and a theoretical coordinate on the normal to the plane of the vehicle,
   the theoretical coordinate on the normal to the plane of the vehicle is defined as the average of the coordinates on the normal to the plane of the vehicle of the points of the scatter chart acquired by the LIDAR sensor included in the section (Si)

   the other theoretical coordinates are defined as the coordinates of a point on an ideal circle inscribed in the plane of the road centred on the vehicle.

2. Method according to Claim 1, wherein at least two sectors in the plane of the vehicle are determined, each associated with a direction of browsing of the sector,
   for each sector, the LIDAR data are browsed in the browsing direction, the affiliation of each LIDAR datum to the road is determined, the browsing of the LIDAR data is interrupted when it is determined that a LIDAR datum is not affiliated with the road and it is determined that the LIDAR data of the sector that have not been browsed are not affiliated with the road.

8

3.    Method according to Claim 2, wherein, for each sector, a Gaussian filter is applied to the results of the determination of the standard deviation in order to reduce the impact of the irregularities, notably a Gaussian filter with kernel of size 3 and of standard deviation 5.

4.    Method according to either one of Claims 2 and 3, wherein it is defined that the forward direction of movement of the vehicle corresponds to an angle 0 of the angle ($\Delta\varphi$) of the beam in the plane of the vehicle,

four sectors are defined in the plane of the vehicle,
a first sector comprising the LIDAR data for which the angle in the plane of the vehicle extends from the angle 0 to the angle n/2, and wherein the LIDAR data are browsed from the initial angle 0 to the final angle n/2 in the plane of the vehicle,
a second sector comprising the LIDAR data for which the angle in the plane of the vehicle extending from the angle n/2 to the angle n, and wherein the LIDAR data are browsed from the initial angle $\pi$ to the final angle n/2 in the plane of the vehicle,
a third sector comprising the LIDAR data for which the angle in the plane of the vehicle extends from the angle $\pi$ to the angle 3n/2 and wherein the LIDAR data are browsed from the initial angle $\pi$ to the final angle 3n/2 in the plane of the vehicle, and
a fourth sector comprising the LIDAR data for which the angle in the plane of the vehicle extends from the angle 3n/2 to the angle 0, and wherein the LIDAR data are browsed in the plane of the vehicle from the initial angle 0 to the final angle 3n/2 in the plane of the vehicle.

5.    Method according to any one of Claims 2 to 4, wherein the steps relating to each sector are performed via a distinct processing means.

6.    Method according to any one of the preceding claims, wherein, for each angle ($\Theta$) of the beam with respect to the plane of the vehicle, it is determined that a LIDAR datum affiliated with the road corresponds to a marking on the ground, if the reflected light intensity perceived by the LIDAR sensor is below a predetermined threshold.

7.    Method according to any one of the preceding claims, wherein the motor vehicle is an autonomous vehicle.

Figure 1

Figure 2

EP 3 850 397 B1

## RÉFÉRENCES CITÉES DANS LA DESCRIPTION

**Documents brevets cités dans la description**

- US 20140081573 A1